# FASCICULE DE BREVET EUROPEEN

(11) **EP 4 619 227 B1**
(45) Date de publication et mention de la délivrance du brevet: **25.11.2026**
(21) Numéro de dépôt: 23809696.0
(22) Date de dépôt: 27.10.2023
(51) Int. Cl.: B29C 70/38

(54) **MACHINE ET PROCÉDÉ DE PLACEMENT DE FIBRES**
MASCHINE UND VERFAHREN ZUM ABLEGEN VON FASERN
MACHINE AND METHOD FOR PLACEMENT OF FIBRES

(30) Priorité: 15.11.2022 FR 2211845
(43) Date de publication de la demande: 24.09.2025
(73) Titulaire: Coriolis Group, 56530 Quéven (FR)
(72) Inventeur: BERLINGEN, Sebastien, 56600 LANESTER (FR); HAMLYN, Alexander, 56270 PLOEMEUR (FR)
(86) Numéro de dépôt international: PCT/FR2023/000165
(87) Numéro de publication internationale: WO 2024/105310

(56) Documents cités:
- EP-A1- 2 636 516
- US-A1- 2011 277 935

## Description

La présente invention concerne une machine de placement de fibres pour la réalisation de pièces en matériau composite, et un procédé de réalisation de pièces en matériau composite correspondant.

Il est connu des machines de placement de fibres pour la réalisation de pièces en matériau composite comprenant un support de drapage apte à porter ou constituer un outillage de drapage, un cantre apte à stocker et délivrer plusieurs fibres, et une tête de placement de fibres comprenant un système de compactage comprenant au moins un rouleau de compactage, pour l'application sur une surface de drapage de l'outillage de drapage de bandes d'une ou plusieurs fibres provenant du cantre, par déplacement relatif de la tête par rapport au support de drapage via un système de déplacement. Les fibres utilisées peuvent être des fibres pré-imprégnées d'un polymère thermoplastique ou thermodurcissable, ou des fibres sèches munies d'un liant ou « binder ».

Ces machines de placement de fibres peuvent être utilisées pour former des préformes sensiblement planes, formées d'une superposition de plis de fibres dans des orientations différentes, chaque pli étant formé de bandes de fibres appliquées les unes à côté des autres avec la tête de placement. Dans ce cas, le support de drapage comprend classiquement une table sur laquelle peut être disposé un outillage de drapage, telle qu'une plaque dont la surface supérieure plane constitue la surface de drapage. La table peut également être formée d'une plaque constituant l'outillage de drapage. Des préformes planes peuvent être obtenues à des cadences importantes, et peuvent être soumises à une opération de formage pour former des préformes tridimensionnelles à partir desquelles seront obtenues des pièces finales tridimensionnelles.

Dans le document brevet US 8,919,410, il a été proposé une machine de placement de fibres dans laquelle la tête de placement est montée sur un cantre fixe, la table étant apte à être entraînée en rotation autour d'un axe de rotation vertical, et à être déplacée en translation selon deux directions horizontales perpendiculaire entre elles. Lors du drapage par déplacement de la table, la tête et le cantre sont fixes l'un par rapport à l'autre, ce qui simplifie le chemin de fibre entre le cantre et la tête, et permet d'atteindre des vitesses de drapage élevées. Cette machine est adaptée pour la réalisation de pièces de petites dimensions, par exemple inférieure à 1 mètre de côté. Pour la réalisation de pièces de grandes dimensions, le système de déplacement nécessaire pour déplacer la table sous la tête dans deux directions horizontales présente un encombrement au sol important. Au vu des masses embarquées, les vitesses et accélérations de la table dans les deux directions peuvent également être limitées.

Pour le drapage de préformes de plus grandes dimensions, il a été proposé dans le document brevet US 10,059,067 une machine de placement dans laquelle la table est mobile en rotation autour d'un axe vertical, et mobile en translation selon une première direction horizontale, le cantre est disposé au sol et la tête est montée sur un portique, mobile en translation dans une deuxième direction horizontale, cette deuxième direction étant perpendiculaire à la première direction horizontale et perpendiculaire à l'axe de rotation du rouleau de compactage. Le drapage d'une première bande sur la table s'effectue par déplacement de la tête dans la deuxième direction horizontale. Pour le drapage d'une deuxième bande à côté de la première bande, la table est dans un premier temps déplacée dans la première direction pour décaler la table par rapport à la tête, puis la tête est déplacée dans la deuxième direction horizontale pour appliquer la deuxième bande sur la table. Lors du drapage d'une bande de fibres, la tête se déplace par rapport au cantre, ce qui complexifie le chemin de fibre et limite les accélérations et vitesses de drapage.

US 2011/277935 A1 divulgue une machine de placement de fibres comprenant un support de drapage apte à porter ou constituer un outillage de drapage, un cantre apte à stocker et délivrer plusieurs fibres et une tête de placement de fibres comprenant un système de compactage comprenant au moins un rouleau de compactage monté rotatif autour de son axe longitudinal pour l'application sur une surface de drapage de l'outillage de drapage de bandes d'une ou plusieurs fibres provenant du cantre, par déplacement relatif de la tête par rapport au support de drapage, ledit support de drapage est apte à être entraîné en rotation autour d'un axe de rotation et à être déplacé en translation selon une première direction perpendiculaire à l'axe de rotation.

Le but de la présente invention est de proposer une machine de placement visant à pallier au moins l'un des inconvénients précités.

A cet effet, la présente invention propose une machine de placement de fibres pour la réalisation de pièces en matériau composite comprenant un support de drapage apte à porter ou constituer un outillage de drapage, un cantre apte à stocker et délivrer plusieurs fibres, et une tête de placement de fibres comprenant un système de compactage comprenant au moins un rouleau de compactage monté rotatif autour de son axe longitudinal, pour l'application sur une surface de drapage de l'outillage de drapage de bandes d'une ou plusieurs fibres provenant du cantre, par déplacement relatif de la tête par rapport au support de drapage, caractérisée en ce que, pour ledit déplacement relatif,
- ledit support de drapage est apte à être entraîné en rotation autour d'un axe de rotation, de préférence vertical, et à être déplacé en translation selon une première direction, de préférence horizontale, perpendiculaire à l'axe de rotation et à l'axe longitudinal du rouleau de compactage,
- ladite machine comprend une structure support sur laquelle sont montés le cantre et la tête de placement, ladite structure support étant apte être déplacée en translation selon une deuxième direction, perpendiculaire à la première direction et à l'axe de rotation, et parallèle à l'axe longitudinal du rouleau de compactage.

Selon l'invention, le support de drapage est monté mobile en translation selon une seule première direction, perpendiculaire à l'axe du rouleau de compactage, la tête et le cantre étant montés mobiles ensemble en translation selon une deuxième direction perpendiculaire à la première direction et parallèle à l'axe du rouleau de compactage. Le drapage d'une bande peut ainsi être effectuée uniquement par déplacement du support de drapage, sans déplacement en translation de la tête, la tête étant déplacée en translation uniquement entre les trajectoires de dépose pour décaler la tête et permettre de drapage des bandes les unes à côté des autres. Le cantre et la tête restent fixes l'un par rapport à l'autre, et immobiles lors du drapage ce qui permet d'avoir un chemin de fibre simple entre la tête et le cantre, et de draper à des vitesses de drapage élevées avec une bonne qualité de drapage.

Le support de drapage monté mobile en translation selon uniquement un seul axe permet également des accélérations et des vitesses de drapage plus importante en comparaison à un support mobile en translation selon deux axes perpendiculaires.

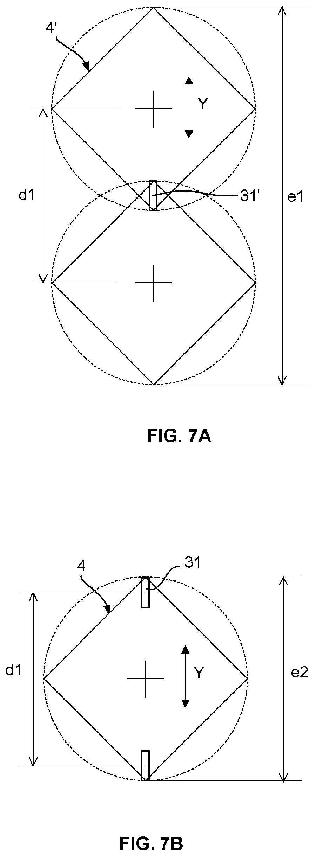

Pour une surface de drapage donnée, le déplacement de la tête et du cantre dans la deuxième direction, à la place du support de drapage, permet en outre de réduire grandement l'encombrement de la table dans la deuxième direction, et ainsi de proposer une machine de taille réduite, avec un plus faible encombrement au sol. A titre d'exemple, la figure 7A illustre, dans le cas d'une machine de l'art antérieur, la course d1 de la table 4' dans la deuxième direction Y qui est nécessaire pour draper sur l'ensemble de la surface de drapage dans toutes les directions, et l'encombrement e1 correspondant de la table dans la direction Y, la table étant rotative autour d'un axe vertical et mobile en translation dans la deuxième direction Y, et la tête de placement associée étant fixe dans la deuxième direction. Le rouleau de compactage de la tête est représenté de manière schématique sous la référence 31'. La figure 7B illustre la course d1 d'une tête de placement selon l'invention, mobile dans la deuxième direction Y, avec un rouleau de compactage 31, combinée à une table 4 de mêmes dimensions, rotative autour d'un axe vertical mais fixe dans la deuxième direction, et l'encombrement correspondant e2 de la table dans la deuxième direction.

De même, le support de drapage monté mobile en translation selon un seul axe permet d'avoir une surface de drapage à une hauteur réduite, et donc une tête de drapage et un cantre à une hauteur réduite, auxquels un opérateur peut accéder aisément dans de bonnes conditions ergonomiques, sans nécessiter de plateforme d'accès.

Par ailleurs, avec le montage de la tête et du cantre mobiles ensemble en translation selon une deuxième direction, il est possible de décaler la tête et le cantre par rapport au support de drapage pour effectuer aisément des opérations de maintenance sur la tête et le cantre, sans avoir à enjamber de rails et sans augmenter excessivement l'encombrement au sol de la machine.

Le support de drapage peut comprendre une table sur laquelle peut être disposé un outillage de drapage, telle qu'une plaque dont la surface supérieure plane constitue la surface de drapage. La table peut également être formée d'une plaque constituant l'outillage de drapage.

Les fibres utilisables par la machine sont de préférence des fibres continues unidirectionnelles plates, classiquement appelées mèches, comprenant une multitude de filaments. Les fibres présentent classiquement une largeur inférieure ou égale à un demi-pouce, par exemple des largeurs d'un huitième de pouce, un quart de pouce ou un demi-pouce (1/8", 1/4" ou 1/2', 3.2, 6.4 or 12.5 mm ). Dans la présente, le terme «fibres » désigne également des fibres de plus grande largeur, supérieure à un demi-pouce, classiquement appelées bandes dans la technologie du placement. Les fibres déposées peuvent être des fibres sèches munies d'un liant, ou des fibres pré-imprégnées de polymère thermodurcissable ou thermoplastique.

Selon un mode de réalisation, pour son déplacement en translation selon la deuxième direction, la structure support présente une forme allongée s'étendant parallèlement à la première direction, la structure support est montée par une première partie d'extrémité en porte-à-faux sur un chariot, ledit chariot étant monté mobile en translation sur un rail linéaire de préférence fixé au sol, disposé selon la deuxième direction, la tête de placement étant montée sur une deuxième partie d'extrémité extrémité de la structure support. Ce montage de la structure support sur un seul rail, avec la tête de placement en porte-à-faux permet de proposer une machine de faible encombrement. Selon un autre mode de réalisation, la structure support s'étend au-dessus de la table et est montée mobile en translation dans la deuxième direction sur deux rails disposés de part et d'autre de la table. Ce montage permet de proposer une machine avec une structure support plus légère, mais avec un encombrement au sol plus important.

Selon un mode de réalisation, pour son déplacement en translation selon la première direction, le support de drapage est monté mobile en rotation sur un chariot autour de l'axe de rotation, ledit chariot étant monté mobile en translation sur un rail linéaire de préférence fixé au sol, disposé selon la première direction.

Selon un mode de réalisation, la tête de placement est montée sur la structure support de manière mobile en translation selon une troisième direction, de préférence verticale, perpendiculaire à la première direction et à la deuxième direction. Selon un mode de réalisation, la tête de placement est reliée à la structure support par au moins un vérin de compactage, de préférence pneumatique, et au moins un vérin de position, de préférence électrique. Selon un mode de réalisation, la tête de placement est montée sur la structure support de manière mobile en translation selon un seul plan de coulissement, un tel montage permettant d'avoir un guidage robuste et précis de la tête dans la troisième direction. Selon un mode de réalisation, la tête de placement est montée sur au moins un premier chariot qui est monté coulissant sur un rail fixé à la structure support, un vérin de position étant relié par un premier élément parmi son corps et sa tige à la structure support et étant relié par l'autre élément à un second chariot qui est monté coulissant sur ledit rail, un vérin de compactage étant relié par un premier élément parmi son corps et sa tige audit second chariot et par l'autre élément au premier chariot. Selon un mode de réalisation, la tête de placement de fibre est reliée à la structure support par deux vérins de compactage et un vérin de position, la tête est montée entre deux plaques de montage, chaque plaque de montage est assemblée à au moins un premier chariot, de préférence deux premiers chariots, montés coulissants sur un rail solidaire de la structure support, un vérin de compactage est relié par son corps sur chaque plaque de montage, et sa tige est reliée à un second chariot monté sur le rail, un vérin de position est monté par son corps sur la structure support, et sa tige est assemblée à une traverse reliant les deux seconds chariots, chaque second chariot étant de préférence monté entre deux premiers chariots.

La présente invention a également pour objet un procédé de réalisation de pièces en matériau composite comprenant l'application de fibres continues, de préférence unidirectionnelles, sur une surface de drapage, caractérisé en ce que ladite application est réalisée au moyen d'une machine de placement de fibres telle que définie précédemment. Selon un mode de réalisation, la pièce ou préforme obtenue à l'issue de l'étape d'application de fibres est soumise à une opération de formage, d'ajout de résine et/ou de cuisson pour obtenir une pièce en matériau composite.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la Figure 1 est une vue en perspective d'une machine de placement selon l'invention, la machine étant en cours de drapage d'une bande de fibres sur la surface de drapage ;
- la Figure 2 est une vue de dessus de la machine de la Figure 1 ;
- la Figure 3 est une vue de dessus analogue à celle de la Figure 2, la structure support portant le cantre et la tête de placement étant dans une position de maintenance ;
- la Figure 4 est une vue de côté de la machine de placement, la tête étant dans une position haute au-dessus de la table,
- la Figure 5 est une vue de côté analogue à celle de la Figure 4, la tête étant en position basse pour le drapage d'une bande sur la table ;
- la Figure 6 est une vue partielle agrandie de la Figure 5 illustrant la tête ;
- la Figure 7A est un schéma illustrant la course d'une table de l'art antérieur selon la deuxième direction Y et son encombrement correspondant dans cette deuxième direction pour une surface de drapage donnée ; et,
- la Figure 7B est un schéma illustrant la course de la tête selon invention dans la deuxième direction Y et l'encombrement correspondant de la table dans cette deuxième direction pour une même surface de drapage.

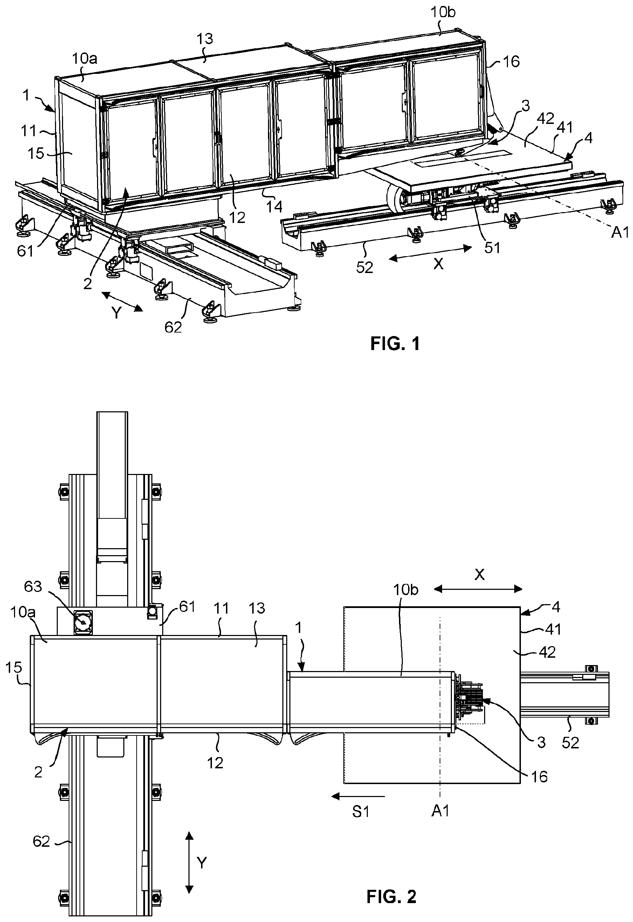

En référence aux figures 1 à 5, la machine de placement de fibres comprend une structure support 1, sur laquelle est montée un cantre 2 pour la réception de bobines de fibre et une tête 3 de placement de fibres, et un support de drapage 4. Le support de drapage 4 est monté mobile en rotation autour d'un axe vertical A2 et mobile en translation selon une première direction X horizontale. La structure support portant le cantre et la tête est montée mobile en translation selon une deuxième direction Y horizontale, perpendiculaire à la première direction X.

Le support 4 de drapage comprend une table 41, formée d'un plateau rectangulaire. La table constitue ici l'outillage de drapage, sa surface supérieure définissant une surface de drapage plane 42. Selon un autre mode de réalisation, la table est destinée à recevoir un outillage de drapage distinct. La table est montée rotative autour d'un axe A2 sur un premier chariot 51, le premier chariot étant monté mobile en translation sur un premier rail 52 linéaire fixé au sol dans la première direction X horizontale. La table est apte à être entraînée en rotation sur le premier chariot par un premier moteur 53, le premier chariot étant apte à être déplacé en translation sur le premier rail par au moins un second moteur 54.

La structure support 1 est montée fixe sur un deuxième chariot 61 qui est mobile en translation sur un second rail 62 fixé au sol dans la deuxième direction Y horizontale. Le second chariot est apte à être déplacé en translation sur le deuxième rail par au moins un troisième moteur 63. La structure support présente une forme globalement parallélépipédique, allongée dans la première direction, avec deux faces latérales opposées 11, 12, une face supérieure 13, une face inférieure 14, une face arrière 15, et une face avant 16 disposé du côté du support de drapage. La structure support comprend une première partie d'extrémité 10a incluant la face arrière 15, et une deuxième partie d'extrémité 10b incluant la face avant 16. La tête est montée au niveau de la deuxième partie d'extrémité 10b de la structure support, par exemple au niveau de la face avant 16. La structure support est montée en porte à faux sur le deuxième chariot 62 par sa première partie d'extrémité, et s'étend majoritairement du côté du second rail où est positionné le premier rail, de sorte que la tête soit disposée en porte à faux au-dessus du sol et de la table.

La machine est prévue pour l'application de bandes de fibres continues plates, de type rubans, par exemple des fibres de carbone, conditionnées sous forme de bobines. Le cantre est formé dans la structure support, principalement au niveau de la première partie d'extrémité de la structure support, et comprend des mandrins pour recevoir les bobines de fibre, qui sont accessibles depuis une face latérale 12 de la structure support. A titre d'exemple, la machine est prévue pour l'applications de bandes de seize fibres, le cantre comprenant seize mandrins, éventuellement motorisés, permettant de recevoir seize bobines de fibre. De manière connue en soi, le cantre peut comprendre un rouleau oscillant, associé à chaque mandrin et sur lequel passe la fibre, permettant de contrôler la rotation du mandrin en fonction de la position du rouleau oscillant. De même, un mandrin secondaire peut être associé à chaque mandrin pour le rembobinage d'un éventuel film séparateur au fur et à mesure du débobinage de la fibre. Les fibres déroulées depuis le cantre sont guidées jusqu'à la tête via des systèmes de guidage de type poulie.

La tête 3 de placement comprend de manière connue en soi :
- un rouleau d'application ou rouleau de compactage 31 apte à venir en contact contre la surface de drapage pour appliquer une bande de fibres ;
- un système de guidage permettant de guider les fibres provenant du cantre vers le rouleau sous la forme de deux nappes de fibres disposées selon deux plans de guidage, afin de former au niveau du rouleau une bande de fibres dans laquelle les fibres sont disposées sensiblement bord à bord ;

- un système de coupe pour couper individuellement chaque fibre ;
- un système de réacheminement pour réacheminer individuellement chaque fibre venant d'être coupée, afin de pouvoir à tout moment stopper et reprendre l'application d'une fibre, ainsi que choisir la largeur de la bande ; et,
- un système de blocage afin de bloquer chaque fibre venant d'être coupée.

A titre d'exemple, le système de guidage, et les systèmes de coupe, de réacheminement et de blocage sont similaires à ceux décrits dans le document brevet WO2008/132299.

Le rouleau de compactage est monté rotatif autour de son axe longitudinal A1, la tête étant montée sur la structure support de sorte que l'axe longitudinal A1 du rouleau soit disposé parallèlement à la deuxième direction Y horizontale. La tête est montée sur la structure support, de manière mobile en translation dans une troisième direction Z verticale. La tête est reliée à la structure support par au moins un vérin de compactage, de préférence pneumatique, le vérin de compactage définissant la force de compactage avec laquelle les fibres sont appliquées sur le moule par le rouleau de compactage, ainsi que par au moins un vérin de position, de préférence électrique, qui définit la position de la tête dans la direction Z.

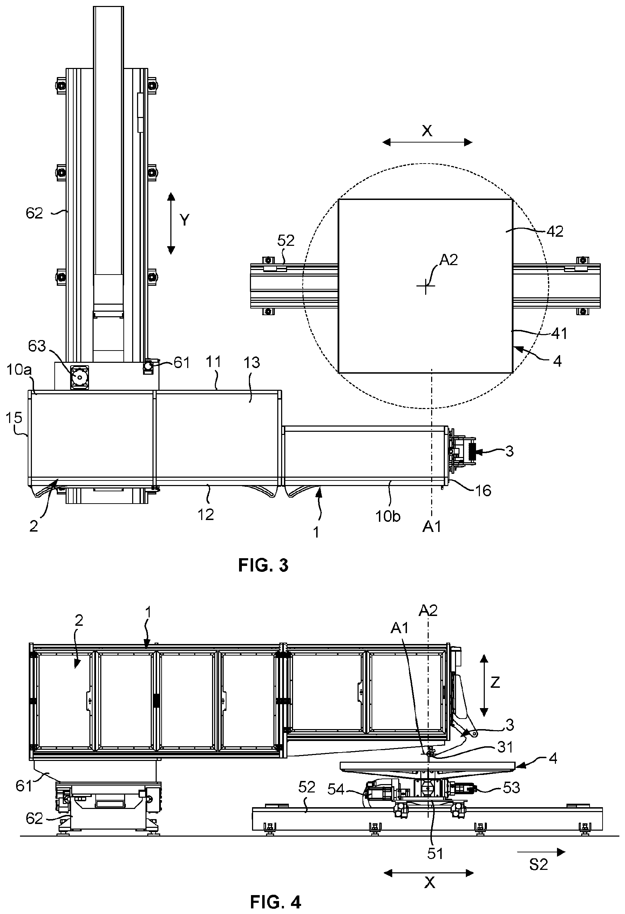

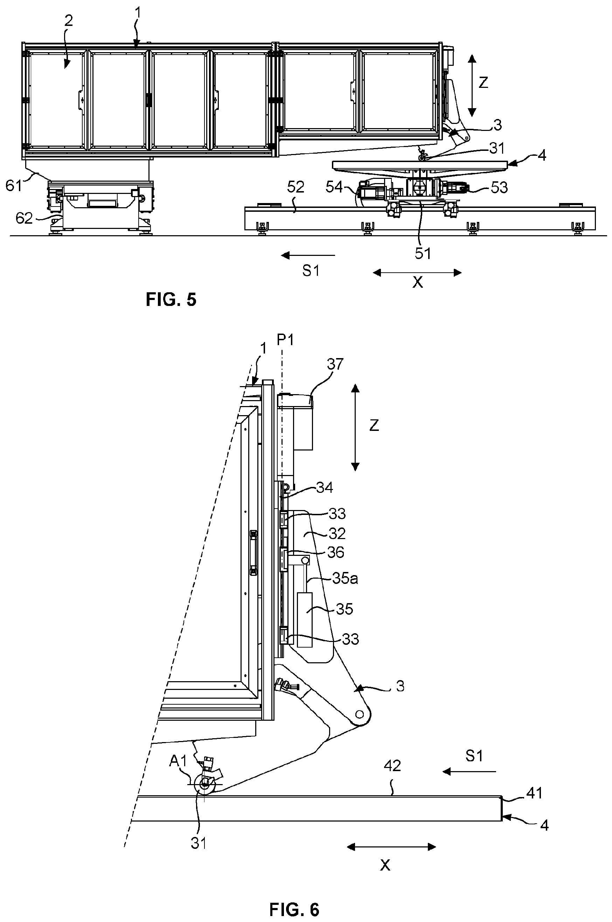

En référence à la figure 6, la tête est montée manière mobile en translation selon un plan de coulissement P1 vertical sur deux rails 34 verticaux solidaires de la structure support. La tête est montée entre deux plaques de montage 32, chaque plaque de montage est équipée de deux premiers chariots 33 montés coulissants sur un rail 34 vertical solidaire de la structure support. Un vérin de compactage 35 est monté par son corps sur chaque plaque de montage, et sa tige 35a s'étend parallèlement à la direction Z et est assemblée à un second chariot 36 monté sur le rail associé à ladite plaque de montage. Les deux seconds chariots sont reliés entre eux par une traverse, un vérin de position 37 est monté par son corps sur la structure support et sa tige est assemblée à ladite traverse. Le vérin de position 37 permet de manœuvrer la tête entre une position haute illustrée à la figure 4, dans laquelle la tête est disposée au-dessus de la table, et une position basse illustrée aux figures 5 et 6, dans laquelle la tête est apte à venir en contact contre la table par son rouleau de compactage. Les vérins de compactage sollicitent la tête verticalement vers le bas. Les vérins de compactage, par exemple de type pneumatique à double effet, sont commandés en pression pour adapter la force de compactage.

La machine peut être utilisée pour la réalisation de préformes formées de plusieurs plis superposés dans différentes orientations, chaque pli étant formé par le drapage de bandes de fibres côte à côte dans une orientation donnée. Les moteurs 53, 54, 63 précités, ainsi que le vérin de position 37 et les vérins de compactage 35 sont pilotés par une unité de commande de la machine pour les déplacements correspondants de la tête ou de la table. La rotation de la table autour de l'axe vertical A2 est effectuée avant la réalisation d'une première bande d'un pli pour définir l'orientation du pli. Le déplacement de la tête dans la direction Z est uniquement effectué en début et en fin de trajectoire de dépose d'une bande, la tête est manœuvrée en position basse pour draper une bande et en position haute pour permettre de déplacer la table dans la direction X et la tête dans la direction Y entre deux bandes. Pour le drapage d'une première bande de fibre d'un pli dans une orientation donnée, la structure support avec la tête en position haute est déplacée dans la direction Y pour amener la tête au-dessus de la table, la table ayant préalablement été positionnée en rotation autour de l'axe A2 selon l'orientation souhaitée du pli. La tête est manœuvrée de sa position haute vers sa position basse pour amener le rouleau de compactage contre la table, et la table est déplacée dans la première direction X, dans le premier sens S1, vers le second rail 62. En fin de trajectoire de dépose, la tête est manœuvrée en position haute. Pour le drapage d'une deuxième bande à côté de la première, la structure support est déplacée dans la direction Y pour décaler la tête d'un pas par rapport à la première bande, et la table est déplacée dans le deuxième sens S2 (Fig. 4), opposé au premier sens, pour repositionner la tête au niveau du début de la première bande. La tête peut alors être amenée en position basse, et la table est déplacée dans le sens S1 pour appliquer la deuxième bande. L'application d'une bande est ainsi effectuée uniquement par le déplacement de la table dans la première direction X, le déplacement dans la deuxième direction Y de la tête étant utilisé uniquement entre deux trajectoires de dépose.

Une fois le drapage d'une préforme finalisée, la structure support peut être déplacée dans la deuxième direction Y à une extrémité du rail, dans une position de maintenance, tel qu'illustré à la figure 4. Dans cette position de maintenance, la structure support est écartée de la table, de sorte qu'un opérateur puisse accéder, dans de bonnes conditions ergonomiques, à la table pour intervenir sur la préforme et/ou la table, ainsi qu'à la tête par exemple pour effectuer des opérations de maintenance, ou au cantre pour effectuer des opérations de maintenance, notamment pour le remplacement des bobines.

Selon un autre mode de réalisation, les positions basse et haute de la tête sont obtenues par les vérins de compactage, formés chacun par un vérin à double effet, le vérin de position étant uniquement utilisé pour faire varier la position basse de la tête entre deux plis successifs, au fur et mesure de la montée en épaisseur de la préforme.

La machine selon l'invention est avantageusement utilisée pour la réalisation de préformes planes à vitesses élevées, selon des trajectoires sans courbure dans le plan des fibres, c'est-à-dire sans « steering » selon le terme anglais communément utilisé par l'homme du métier. Bien entendu, la machine selon l'invention pourra être utilisée pour la réalisation de préformes non planes et/ou avec du « steering », en combinant lors des trajectoires de dépose des déplacements de la table dans la direction X, avec des déplacements de la tête dans la direction Y ou la direction Z, et/ou des déplacements en rotation de la table atour de son axe A2.

Selon un mode de réalisation, la machine comprend un système limiteur de tension, par exemple tel que décrit dans la demande de brevet FR21/14113 déposée le 23/12/2021 par la demanderesse, monté sur la structure support, entre le cantre et la tête, afin de réduire la tension des fibres entrant dans la tête.

Selon un mode de réalisation, la machine comprend un système d'application de liant, par exemple tel que décrit dans le document brevet EP3426452, monté sur la structure support, entre le cantre et la tête, ou entre l'éventuel système limiteur de tension précité et la tête, pour appliquer un liant sur chaque fibre provenant du cantre.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention comme définie dans les revendications annexées.

## Revendications

1. Machine de placement de fibres comprenant
- un support de drapage (4) apte à porter ou constituer un outillage de drapage (41),
- un cantre (2) apte à stocker et délivrer plusieurs fibres, et
- une tête de placement (3) de fibres comprenant un système de compactage comprenant au moins un rouleau de compactage (31) monté rotatif autour de son axe longitudinal (A1), pour l'application sur une surface de drapage (42) de l'outillage de drapage de bandes d'une ou plusieurs fibres provenant du cantre, par déplacement relatif de la tête par rapport au support de drapage,
- ledit support de drapage (4) est apte à être entraîné en rotation autour d'un axe de rotation (A2) et à être déplacé en translation selon une première direction (X), perpendiculaire à l'axe de rotation (A2) et à l'axe longitudinal (A1) du rouleau de compactage,
- ladite machine comprend une structure support (1) sur laquelle sont montés le cantre (2) et la tête de placement (3), ladite structure support étant apte à être déplacée en translation selon une deuxième direction (Y), perpendiculaire à la première direction (X) et à l'axe de rotation (A2), et parallèle à l'axe longitudinal (A1) du rouleau de compactage.

2. Machine selon la revendication 1, **caractérisée en ce que** la structure support (1) présente une forme allongée s'étendant parallèlement à la première direction, la structure support (1) est montée par une première partie d'extrémité (10a) en porte-à-faux sur un chariot (61), ledit chariot étant monté mobile en translation sur un rail (62) linéaire disposé selon la deuxième direction (Y), la tête de placement étant montée sur une deuxième partie d'extrémité extrémité (10b) de la structure support.

3. Machine selon la revendication 1 ou 2, **caractérisée en ce que** le support de drapage (4) est monté mobile en rotation sur un chariot (51) autour de l'axe de rotation (A2), ledit chariot étant monté mobile en translation sur un rail (52) linéaire disposé selon la première direction (X).

4. Machine selon l'une des revendications 1 à 3, **caractérisée en ce que** la tête de placement (3) est montée sur la structure support de manière mobile en translation selon une troisième direction (Z), perpendiculaire à la première direction (X) et à la deuxième direction (Y).

5. Machine selon l'une la revendication 4, **caractérisée en ce que** la tête de placement (3) est reliée à la structure support (1) par au moins un vérin de compactage (35), et au moins un vérin de position (37).

6. Machine selon la revendication 5, **caractérisée en ce que** la tête de placement (3) est montée sur la structure support (1) de manière mobile en translation selon un seul plan de coulissement (P1).

7. Machine selon la revendication 6, **caractérisée en ce que** la tête de placement (3) est montée sur au moins un premier chariot (33) qui est monté coulissant sur un rail (34) fixé à la structure support (1), un vérin de position étant relié par un premier élément parmi son corps et sa tige à la structure support et étant relié par l'autre élément à un second chariot (36) qui est monté coulissant sur ledit rail, un vérin de compactage (35) étant relié par un premier élément parmi son corps et sa tige audit second chariot (36) et par l'autre élément au premier chariot (33).

8. Machine selon l'une des revendications 1 à 7, **caractérisée en ce qu'**elle comprend un système d'application de liant, monté sur la structure support entre le cantre et la tête, pour appliquer un liant sur chaque fibre provenant du cantre.

9. Machine selon la revendication 8, **caractérisée en ce que** le système d'application de liant est un système de fibérisation.

10. Procédé de réalisation de pièces en matériau composite comprenant l'application de fibres continues sur une surface de drapage, **caractérisé en ce que** ladite application est réalisée au moyen d'une machine de placement de fibres selon l'une des revendications 1 à 9.

11. Procédé selon la revendication 10, **caractérisée en ce que** ladite application est réalisée au moyen d'une machine de placement de fibres selon l'une des revendications 1 à 7, avec un cantre chargé de fibres pré-imprégnées d'un polymère thermoplastique ou thermodurcissable, ou de fibres sèches munies d'un liant.

12. Procédé selon la revendication 10, **caractérisée en ce que** ladite application est réalisée au moyen d'une machine de placement de fibres selon la revendication 8, avec application en ligne de liant sur chaque fibre sortant du cantre.

13. Procédé selon la revendication 10, **caractérisée en ce que** ladite application est réalisée au moyen d'une machine de placement de fibres selon la revendication 9, avec application en ligne de liant sur chaque fibre sortant du cantre par un système de fibérisation.

## Patentansprüche

1. Faserverlegemaschine, umfassend
- einen Drapierträger (4), der in der Lage ist, ein Drapierwerkzeug (41) zu tragen oder zu bilden,
- ein Lagergestell (2), das in der Lage ist, mehrere Fasern zu lagern und abzugeben, und
- einen Faserverlegekopf (3), der ein Verdichtungssystem umfasst, das mindestens eine um seine Längsachse (A1) drehbar montierte Verdichtungswalze (31) umfasst, zum Aufbringen eines oder mehrerer Faserbänder von dem Lagergestell auf eine Drapierfläche (42) des Drapierwerkzeugs durch relative Verschiebung des Kopfes in Bezug auf den Drapierträger,
- wobei der Drapierträger (4) in der Lage ist, um eine Drehachse (A2) drehbar angetrieben und in einer senkrecht zu der Drehachse (A2) und zu der Längsachse (A1) der Verdichtungswalze verlaufenden ersten Richtung (X) translatorisch verschoben zu werden,
- wobei die Maschine eine Trägerstruktur (1) umfasst, an der das Lagergestell (2) und der Verlegekopf (3) montiert sind, wobei die Trägerstruktur in der Lage ist, in einer zweiten Richtung (Y), die senkrecht zu der ersten Richtung (X) und zu der Drehachse (A2) und parallel zu der Längsachse (A1) der Verdichtungswalze verläuft, translatorisch verschoben zu werden.

2. Maschine nach Anspruch 1, **dadurch gekennzeichnet, dass** die Trägerstruktur (1) eine längliche Form aufweist, die sich parallel zu der ersten Richtung erstreckt, wobei die Trägerstruktur (1) über einen ersten Endabschnitt (10a) freitragend an einem Schlitten (61) montiert ist, wobei der Schlitten translationsbeweglich auf einer linearen Schiene (62) montiert ist, die in der zweiten Richtung (Y) angeordnet ist, wobei der Verlegekopf an einem zweiten Endabschnitt (10b) der Trägerstruktur montiert ist.

3. Maschine nach Anspruch 1 oder 2, **dadurch gekennzeichnet, dass** der Drapierträger (4) drehbeweglich auf einem Schlitten (51) um die Drehachse (A2) herum montiert ist, wobei der Schlitten translationsbeweglich auf einer in der ersten Richtung (X) angeordneten linearen Schiene (52) montiert ist.

4. Maschine nach einem der Ansprüche 1 bis 3, **dadurch gekennzeichnet, dass** der Verlegekopf (3) translationsbeweglich in einer dritten Richtung (Z), die senkrecht zu der ersten Richtung (X) und zu der zweiten Richtung (Y) verläuft, an der Trägerstruktur montiert ist.

5. Maschine nach Anspruch 4, **dadurch gekennzeichnet, dass** der Verlegekopf (3) über mindestens einen Verdichtungszylinder (35) und mindestens einen Positionierungszylinder (37) mit der Trägerstruktur (1) verbunden ist.

6. Maschine nach Anspruch 5, **dadurch gekennzeichnet, dass** der Verlegekopf (3) in einer einzigen Gleitebene (P1) translationsbeweglich an der Trägerstruktur (1) montiert ist.

7. Maschine nach Anspruch 6, **dadurch gekennzeichnet, dass** der Verlegekopf (3) auf mindestens einem ersten Schlitten (33) montiert ist, der auf einer an der Trägerstruktur (1) befestigten Schiene (34) gleitend montiert ist, wobei ein Positionierungszylinder durch ein erstes Element zwischen seinem Körper und seiner Stange mit der Trägerstruktur verbunden ist und durch das andere Element mit einem zweiten Schlitten (36) verbunden ist, der auf der Schiene gleitend montiert ist, wobei ein Verdichtungszylinder (35) durch ein erstes Element zwischen seinem Körper und seiner Stange mit dem zweiten Schlitten (36) und durch das andere Element mit dem ersten Schlitten (33) verbunden ist.

8. Maschine nach einem der Ansprüche 1 bis 7, **dadurch gekennzeichnet, dass** sie ein Bindemittel-Applikationssystem umfasst, das an der Trägerstruktur zwischen dem Lagergestell und dem Kopf montiert ist, um ein Bindemittel auf jede Faser von dem Lagergestell aufzubringen.

9. Maschine nach Anspruch 8, **dadurch gekennzeichnet, dass** das Bindemittel-Applikationssystem ein Faserbildungssystem ist.

10. Verfahren zur Herstellung von Teilen aus Verbundmaterial, umfassend das Aufbringen von Endlosfasern auf eine Drapierfläche, **dadurch gekennzeichnet, dass** das Aufbringen mittels einer Faserverlegemaschine nach einem der Ansprüche 1 bis 9 erfolgt.

11. Verfahren nach Anspruch 10, **dadurch gekennzeichnet, dass** das Aufbringen mittels einer Faserverlegemaschine nach einem der Ansprüche 1 bis 7 erfolgt, wobei das Lagergestell mit Fasern, die mit einem thermoplastischen oder duroplastischen Polymer vorimprägniert sind, oder mit trockenen Fasern, die mit einem Bindemittel versehen sind, beladen ist.

12. Verfahren nach Anspruch 10, **dadurch gekennzeichnet, dass** das Aufbringen mittels einer Faserverlegemaschine nach Anspruch 8 mit dem Inline-Aufbringen eines Bindemittels auf jede aus dem Lagergestell austretende Faser erfolgt.

13. Verfahren nach Anspruch 10, **dadurch gekennzeichnet, dass** das Aufbringen mittels einer Faserverlegemaschine nach Anspruch 9 mit dem Inline-Aufbringen eines Bindemittels auf jede aus dem Lagergestell austretende Faser durch ein Faserbildungssystem erfolgt.

## Claims

1. Fibre placement machine comprising
- a lay-up support (4) able to carry or constitute a lay-up tool (41),
- a creel (2) able to store and deliver several fibres, and
- a fibre placement head (3) comprising a compaction system including at least one compaction roller (31) rotatably mounted around its longitudinal axis (A1), for the application onto a lay-up surface (42) of the lay-up tool of bands of one or more fibres coming from the creel, by relative displacement of the head with respect to the lay-up support,
- said lay-up support (4) can be driven in rotation around a rotation axis (A2) and displaced in translation along a first direction (X), perpendicular to the rotation axis (A2) and to the longitudinal axis (A1) of the compaction roller,
- said machine comprises a support structure (1) on which the creel (2) and the placement head (3) are mounted, said support structure being able to be displaced in translation along a second direction (Y), perpendicular to the first direction (X) and to the rotation axis (A2), and parallel to the longitudinal axis (A1) of the compaction roller.

2. Machine according to claim 1, **characterized in that** the support structure (1) has an elongated shape extending parallely to the first direction, the support structure (1) is mounted by a first end portion (10a) cantilevered on a carriage (61), said carriage being mounted mobile in translation on a linear rail (62) arranged along the second direction (Y), the placement head being mounted on a second end portion (10b) of the support structure.

3. Machine according to claim 1 or 2, **characterized in that** the lay-up support (4) is mounted mobile in rotation on a carriage (51) around the rotation axis (A2), said carriage being mounted mobile in translation on a linear rail (52) arranged along the first direction (X).

4. Machine according to one of claims 1 to 3, **characterized in that** the placement head (3) is mounted on the support structure so as to be mobile in translation in a third direction (Z), perpendicular to the first direction (X) and to the second direction (Y).

5. Machine according to claim 4, **characterized in that** the placement head (3) is connected to the support structure (1) by at least one compaction cylinder (35) and at least one position cylinder (37).

6. Machine according to claim 5, **characterized in that** the placement head (3) is mounted on the support structure (1) so as to be mobile in translation along a single sliding plane (P1).

7. Machine according to claim 6, **characterized in that** the placement head (3) is mounted on at least one first carriage (33) which is slidably mounted on a rail (34) fixed to the support structure (1), a position cylinder being connected by a first element among its body and its rod to the support structure and being connected by the other element to a second carriage (36) which is slidably mounted on said rail, a compacting cylinder (35) being connected by a first element among its body and its rod to said second carriage (36) and by the other element to the first carriage (33).

8. Machine according to one of claims 1 to 7, **characterized in that** it comprises a binder application system, mounted on the support structure between the creel and the head, for applying a binder to each fibre coming from the creel.

9. Machine according to claim 8, **characterized in that** the binder application system is a fiberization system.

10. Method for the production of composite parts comprising the application of continuous fibres to a lay-up surface, **characterized in that** said application is performed by means of a fibre placement machine according to one of claims 1 to 9.

11. Method according to claim 10, **characterized in that** said application is carried out by means of a fibre placement machine according to one of claims 1 to 7, with a creel loaded with fibres preimpregnated with a thermoplastic or thermosetting polymer, or with dry fibres provided with a binder.

12. Method according to claim 10, **characterized in that** said application is carried out by means of a fibre placement machine according to claim 8, with in-line application of binder to each fibre exiting the creel.

13. Method according to claim 10, **characterized in that** said application is carried out by means of a fibre placement machine according to claim 9, with in-line application of binder to each fibre exiting the creel by a fiberization system.
